# EUROPÄISCHE PATENTSCHRIFT

(11) **EP 1 277 094 B1**
(45) Veröffentlichungstag und Bekanntmachung des Hinweises auf die Patenterteilung: **20.10.2004**
(21) Anmeldenummer: 00988811.6
(22) Anmeldetag: 30.12.2000
(51) Int. Cl.: G05B 19/042, G05B 19/418

(54) **ÜBERWACHUNGSVERFAHREN FUR VERNETZTE DATENVERARBEITUNGSANLAGEN**
MONITORING METHOD FOR NETWORKED DATA PROCESSING INSTALLATIONS
PROCEDE DE SURVEILLANCE POUR INSTALLATIONS DE TRAITEMENT DE DONNEES EN RESEAU

(30) Priorität: 22.04.2000 EP 00108719
(43) Veröffentlichungstag der Anmeldung: 22.01.2003
(73) Patentinhaber: Siemens Schweiz AG, 8047 Zürich (CH)
(72) Erfinder: ROWDEN, Neville, CH-8605 Gutenswil (CH)
(86) Internationale Anmeldenummer: PCT/EP2000/013342
(87) Internationale Veröffentlichungsnummer: WO 2001/082010

(56) Entgegenhaltungen:
- EP-A- 0 246 218
- EP-A- 0 394 514
- EP-A- 0 713 180
- EP-A- 0 902 369
- DE-A- 4 332 881
- DE-A- 19 745 963
- US-A- 6 012 147

## Beschreibung

Die vorliegende Erfindung betrifft ein Überwachungsverfahren nach dem Oberbegriff des Patentanspruchs 1.

Datenverarbeitungsanlagen können zur unmittelbaren Kommunikation mit Benutzern eingesetzt werden, wie das üblich bei den am Arbeitsplatz verwendeten Datenverarbeitungsanlagen der Fall ist. Sie dienen einer Datenerfassung und Datenausgabe, sowie einer Visualisierung von Prozessen. Andere Verwendungsmöglichkeiten von Datenverarbeitungsanlagen stellen zum Beispiel ihre Einsätze als Steuerrechner, Regelungsrechner, Prozessrechner oder Datenrechner dar. Systeme bestehend aus Datenverarbeitungsanlagen mit unterschiedlichen, zum Teil sicherheitsrelevanten Aufgaben, werden insbesondere in der Eisenbahntechnik vernetzt. Diese vernetzten Systeme werden nachfolgend als Netzwerke beschrieben.

Um eine hohe Verfügbarkeit dieser Netzwerke zu erhalten, werden alle relevanten Daten und Prozesse redundant abgebildet. Eine typische Konfiguration eines Teilsystems im Netzwerk zur Sicherstellung von relevanten Daten und Prozessen besteht aus drei Datenverarbeitungsanlagen, wovon zwei Datenverarbeitungsanlagen redundante Prozesse abbilden und eine dritte Datenverarbeitungsanlage als Ersatz zur Verfügung steht. Eine Überwachung solcher Netzwerke kann mit funktional abgesonderten speziell ausgebildeten Datenverarbeitungsanlagen durchgeführt werden. Eine als Rechnerknoten ausgebildete Konfiguration von "2-aus-3-Rechnersystemen" ist in DE 197 45 963 A1 (Alcatel, Paris) offenbart. Gemäss dieser Lehre ist vorgesehen, dass jeder Rechner des einen Knotens mit jedem Rechner in einem anderen Knoten über eine eigene Kommunikationsverbindung verfügt, so dass in jedem Knoten ein Rechner ausfallen darf und dennoch zwei unabhängige Kommunikationsverbindungen zwischen den Rechnern bestehen bleiben.

Um über längere unbewachte Zeiträume Netzwerke betreiben zu können, haben sich Überwachungsprozesse etabliert, die von den funktional abgesonderten Datenverarbeitungsanlagen bearbeitet werden. Aufgabe der überwachenden abgesonderten Datenverarbeitungsanlagen ist das Sammeln und Bearbeiten von Zustandsinformationen der vernetzten Datenverarbeitungsanlagen. Bei Bedarf können durch die überwachenden Datenverarbeitungsanlagen Massnahmen einleitet werden.

In EP 0 394 514 A1 (Siemens AG, München) ist zur sicheren Verarbeitung von Daten ein Verfahren zur Synchronisation von Datenverarbeitungsanlagen offenbart, das nur bei synchronisationsbedingenden Ereignissen jeweils initiiert wird.

In DE 43 32 881 A1 (KSP Ingenieurtechnische Dienste GmbH, Chemnitz) ist ein fehlertolerantes Multicomputersystem mit einer gewissen Anzahl von Computerknoten beschrieben, das vollständig dezentral realisiert ist. Dabei bei Tolerierung von M Fehlern (2 ^{·} M+1) Computerknoten vorgesehen, die je über mehrere teilweise oder vollständig verschiedene Kommunikationswege verbunden sind. Auf die gleiche Weise ist auch die Peripherie verteilt, das heisst bei Tolerierung von Q Fehlern sind wenigstens (2 ^{·} Q+1) Ein-/Ausgabebaugruppen vorgesehen, wobei ein Computerknoten nur mit einer einzigen Ein-/Ausgabebaugruppen verbunden ist. Die sichere Ausgestaltung des in DE 43 32 881 A1 offenbarten Multicomputersystems ist mit einem hohen Aufwand zur Realisierung der teilweise oder vollständig verschiedenen Kommunikationswege verbunden, auch wenn diese in einem engen räumlichen Punkt-Punktnetzwerk vermascht sind. Die enge räumliche Anordnung ist mit der Gefahr verbunden, dass durch eine äussere Einwirkung die erlangte Sicherheit in der Verarbeitung nicht gewährleistet ist.

Der vorliegenden Erfindung liegt daher die Aufgabe zugrunde, ein Überwachungsverfahren und ein System zur Durchführung des genannten Verfahrens für vernetzte und räumlich getrennte Datenverarbeitungsanlagen anzugeben, so dass eine möglichst hohe Verfügbarkeit der vernetzten Datenverarbeitungsanlagen erreicht wird und damit Fehler erkannt und Massnahmen eingeleitet werden können.

Diese Aufgabe wird erfindungsgemäss durch das im Patentanspruch 1 angegebene Überwachungsverfahren gelöst. Vorteilhafte Ausgestaltungen der Erfindung sind in weiteren Ansprüchen angegeben.

Durch das erfindungsgemässe Verfahren werden alle vernetzten Datenverarbeitungsanlagen in die Überwachung mit eingebunden, so dass jeder Datenverarbeitungsanlage eine andere Datenverarbeitungsanlage zur Überwachung zugeteilt ist. Die Zuteilung erfolgt bei einem Systemstart statisch durch vorprogrammierte Speicher, sie kann jedoch während dem Betrieb dynamisch aufgrund von Zustandsinformationen geändert werden. Es braucht somit keine zusätzlichen funktional abgesonderten Überwachungsanlagen.

Die Zuteilung der Überwachungsaufgabe kann unter den Datenverarbeitungsanlagen frei vorgenommen werden, da der Überwachungsprozess in allen Datenverarbeitungsanlagen identisch abläuft.

Das Verfahren wird in zwei Stufen, global in der Netzwerkebene und lokal in der Datenverarbeitungsanlagenebene durchgeführt.

In der ersten globalen Stufe wird von jeder Datenverarbeitungsanlage Zustandsinformationen der vernetzten Datenverarbeitungsanlagen gesammelt. Dies kann beispielsweise durch Aussenden einer allgemeinen Anfrage (Broadcast) initiiert werden. Die Datenverarbeitungsanlagen melden sich daraufhin autonom mit Ihren Zustandsinformationen unter Einhaltung eines gewählten Netzwerkprotokolls. Auf eine Initiierung, des beschriebenen Vorganges durch Aussenden einer Anfrage, kann verzichtet werden, wenn die Datenverarbeitungsanlagen unter Berücksichtigung vordefinierbarer Zeitintervalle autonom Zustandsmeldungen absetzen dürfen. Die gesammelte Information jeder einzelnen Datenverarbeitungsanlage wird anschliessend anhand definierter Kriterien überprüft. Diese Kriterien sind zum Beispiel das Vorhandensein oder die Vollständigkeit oder der fehler freie Inhalt einer Zustandsmeldung. Ein Inhalt einer Zustandsmeldung ist nicht fehlerfrei, wenn z.B. der Inhalt selbst einen Fehler durch ein an sich korrektes Bitmuster offenbart, oder wenn die Prüfsumme des Inhaltes nicht mit den Vorgaben übereinstimmt.

In der zweiten lokalen Stufe werden alle relevanten lokalen Prozesse und Daten der eigenen Datenverarbeitungsanlage auf Korrektheit und Datenintegrität überprüft. Diese Überprüfung kann beispielsweise anhand von Prüfsummen und Datenmustern, sowie Teilergebnissen der Prozesse durchgeführt werden.

Die Ergebnisse der globalen und lokalen Überprüfungen werden wieder durch die eigene Zustandsinformation den vernetzten Datenverarbeitungsanlagen zur Verfügung gestellt.

Durch dieses Verfahren sind im Bedarfsfall lokal genaue Zustandsinformationen der vernetzten Datenverarbeitungsanlagen verfügbar.
Da alle vernetzten Datenverarbeitungsanlagen die Zustandsinformationen aller anderen Datenverarbeitungsanlagen kennen, kann ein Fehler:
1. frühzeitig selbst oder durch eine beliebige andere Datenverarbeitungsanlage erkannt werden,
2. durch weitere Datenverarbeitungsanlagen verifiziert werden,
so dass eine schrittweise Behebung des Fehlers möglich wird und somit eine erhöhte Verfügbarkeit vom System resultiert.

Ein weiterer Vorteil zeigt sich darin, dass die Massnahmen zum Korrigieren von Fehlern zu jeder Zeit an den aktuellen Systemzustand anpassbar sind, da dieser den vernetzten Datenverarbeitungsanlagen bekannt ist.

Dies kann für Funktionsübernahmen der anderen vernetzten Datenverarbeitungsanlagen verwendet werden bis die fehlerhafte Datenverarbeitungsanlage wieder funktioniert.

In der Praxis kann ein Teil der Datenverarbeitungsanlagen im Netzwerk in physikalischen und/oder funktionalen Gruppen zusammengefasst werden. In Bezug auf die Erfindung können die einzelnen Datenverarbeitungsanlagen teilweise oder vollständig durch Gruppen von Datenverarbeitungsanlagen ersetzt werden, wobei die Gruppen von Datenverarbeitungsanlagen die gleichen Aufgaben in Bezug auf die Überwachung übernehmen, wie die einzelnen Datenverarbeitungsanlagen.

Ausführungsbeispiele der Erfindung werden nachfolgend anhand der Zeichnungen näher erläutert. Dabei zeigen:
- Figur 1: den allgemeinen Aufbau von gekoppelten Datenverarbeitungsanlagen als Netzwerk,
- Figur 2: den Aufbau von gekoppelten Datenverarbeitungsanlagen, welche zur Erhöhung der Verfügbarkeit in redundanten Gruppen zusammengefasst wurden,
- Figur 3: den Teilaufbau von direkt ans Netzwerk gekoppelten Datenverarbeitungsanlagen in redundanter Ausführung und
- Figur 4: den inneren Verfahrensaufbau einer Datenverarbeitungsanlage im Zusammenhang mit einer vernetzten Datenverarbeitungsanlage.

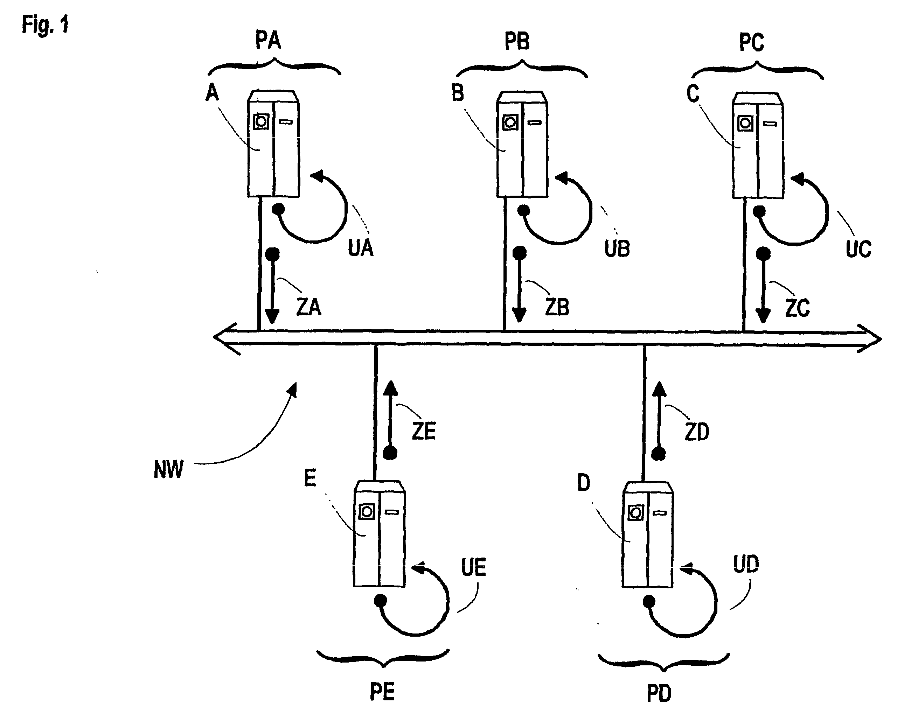

Figur 1 zeigt einen typischen Aufbau eines Netzwerkes NW mit vernetzten Datenverarbeitungsanlagen A bis E. Der Einfachheit wegen, werden in diesem Beispiel den Datenverarbeitungsanlagen A bis E Prozesse PA bis PE zugewiesen, welche in der Praxis aus vielen Prozessen und Funktionen bestehen können. Ein hier weiter zu beschreibendes Überwachungssystem sieht vor, dass sich jede einzelne Datenverarbeitungsanlage A bis E in einem ersten Schritt selbst periodisch überprüft.
Die Selbstüberprüfung UA bis UE umfasst lokale Prozesse auf Datenintegrität statisch und dynamisch sowie auf Prozesslauffähigkeit. Globale Prozessdaten, die von mehreren lokalen Prozessen verwendet werden, werden auf Datenintegrität statisch und dynamisch überprüft. Als Resultat der Selbstüberprüfung UA bis UE gehen Zustandsinformationen ZA bis ZE hervor, die noch weitere Betriebszustände beinhalten können. Die periodisch im Netzwerk NW verbreiten Zustandsinformationen ZA bis ZE können von allen vernetzten Datenverarbeitungsanlagen angefordert, respektive empfangen werden.

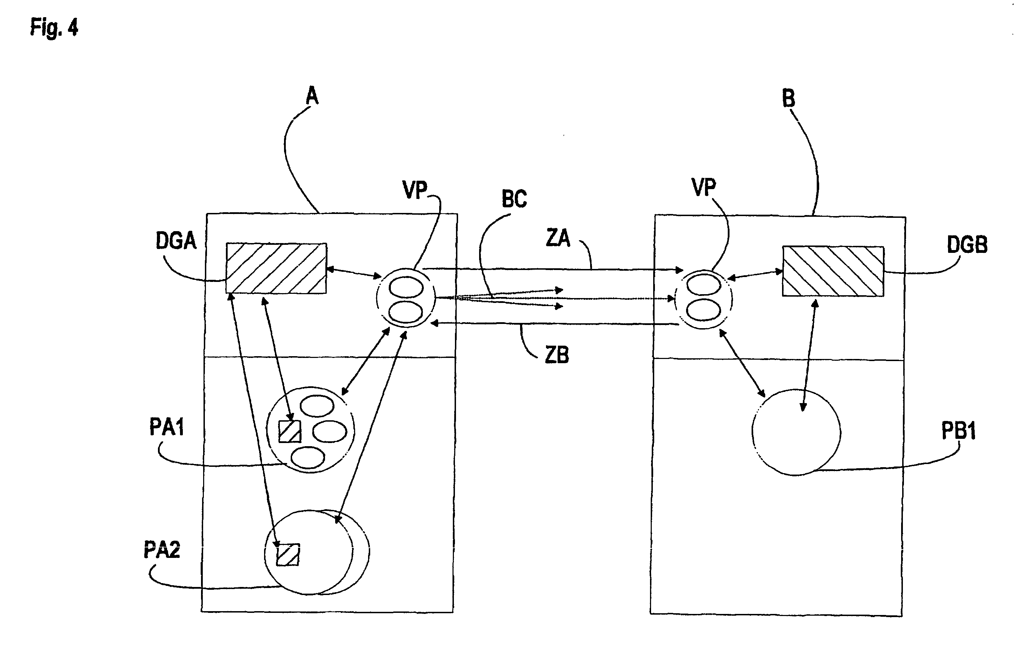

Die Figur 4 zeigt den Verfahrensablauf in der Datenverarbeitungsanlage A noch etwas genauer auf. Ein Verwaltungsprozess VP, welcher funktional in allen vernetzten Datenverarbeitungsanlagen A bis E der gleiche ist, überwacht und steuert ein auf jeder Datenverarbeitungsanlage A bis E laufendes lokales und globales Überwachungsverfahren.
Der Verwaltungsprozess VP selbst kann aus mehreren unabhängigen Prozessen bestehen. Die lokalen Prozesse PA1 und PA2 überprüfen anhand globaler Daten DGA ihre eigenen lokalen Daten. Die Prozesslauffähigkeit und die Datenintegrität wird danach dem Verwaltungsprozess VP mitgeteilt. Anhand der empfangenen Zustandsinformationen z.B. ZB können die eigenen globalen Daten DGA durch den Verwaltungsprozess überprüft werden. Zum Empfangen von Zustandsmeldungen kann eine Anfrage BC an die vernetzten Datenverarbeitungsanlagen gesendet werden, welche in bestimmbaren Zeitrastern mit Ihren Zustandsinformationen antworten müssen. In Figur 4 antwortet zum Beispiel die Datenverarbeitungsanlage B mit der ihrer Zustandsinformation ZB. Alle gesammelten Resultate der Datenverarbeitungsanlage A werden wiederum der eigenen Zustandsinformation ZA hinzugefügt.
Um die Datenverarbeitungsanlagen A bis E zu überwachen wird jeder Datenverarbeitungsanlage A bis E eine Überwachungsfunktion einer anderen Datenverarbeitungsanlage A bis E zugewiesen. So ist in Figur 1 die Datenverarbeitungsanlage B für die Überwachung der Datenverarbeitungsanlage A verantwortlich, die Datenverarbeitungsanlage C für die Überwachung der Datenverarbeitungsanlage B, die Datenverarbeitungsanlage D für Überwachung der Datenverarbeitungsanlage C und so weiter. Es wird mit Vorteil darauf geachtet, dass eine geschlossene Abhängigkeit bei der Zuweisung der Überwachungsfunktion entsteht, um keinen Unterbruch in der Überwachung im Fehlerfall zu riskieren.

Detektiert die Datenverarbeitungsanlage B einen Fehler durch die Selbstüberprüfung UB, so wird sie dies mit der Zustandsinformation ZB allen anderen Datenverarbeitungsanlagen mitteilen. Die für die Überwachung zuständige Datenverarbeitungsanlage C wird in diesem eindeutigen Fall nach erhalt der Zustandsinformation ZB die geeigneten Massnahmen ergreifen, zum Beispiel durch neu initialisieren der Datenverarbeitungseinheit B oder durch ein Verlagern des Prozesses PB im Netzwerk auf freie Kapazitäten, da diese durch die Zustandsinformationen ZA bis ZE bekannt sind oder durch andere spezifisch geeignete Massnahmen. Diese Massnahmen können in jedem Fall situativ den Fehler berücksichtigen und somit ist ein schrittweises Vorgehen möglich.

Falls durch einen Fehler eine Datenverarbeitungsanlage ihre Überwachungsfunktionen nicht mehr ausführen kann, übernimmt die Datenverarbeitungsanlage, die für diese nun ausgeschaltete Datenverarbeitungsanlage verantwortlich ist, nun die Überwachungsaufgaben der defekten Datenverarbeitungsanlage. In diesem Beispiel würde bei einem Ausfall der Datenverarbeitungsanlage B die Datenverarbeitungsanlage C die Überwachung der Datenverarbeitungsanlage A übernehmen.

Andere Möglichkeiten von direkten Fehleroffenbarungen sind unvollständig oder nicht zur rechten Zeit abgelegte Zustandsinformationen ZA bis ZE der vernetzten Datenverarbeitungsanlagen A bis E auf dem Netzwerk.

Eine weitere Ausbildung des Verfahrens erlaubt eine indirekte Offenbarung von Fehlern. Dieser Fall ergibt sich, wenn zwei nicht mit der Überwachung betraute Datenverarbeitungsanlagen der zuständigen überwachenden Datenverarbeitungsanlage einen Fehler ihrer zu überwachenden Datenverarbeitungsanlage Melden. Als Beispiel detektieren die Datenverarbeitungsanlagen A und E, dass ihre globalen Prozessdaten nicht mit den Daten der Datenverarbeitungsanlage B übereinstimmen, worauf sie diese Erkenntnis in ihren Zustandsinformationen offenbaren und somit der verantwortlichen überwachenden Datenverarbeitungsanlage C mitteilen. Aufgrund der parametrierbaren Anzahl übereinstimmenden direkten und indirekten Fehleroffenbarungen ist es für die verantwortliche überwachende Datenverarbeitungsanlage C möglich, sehr früh geeignete Massnahmen zu ergreifen, respektive einen Wiederherstellungsprozess anzustossen.

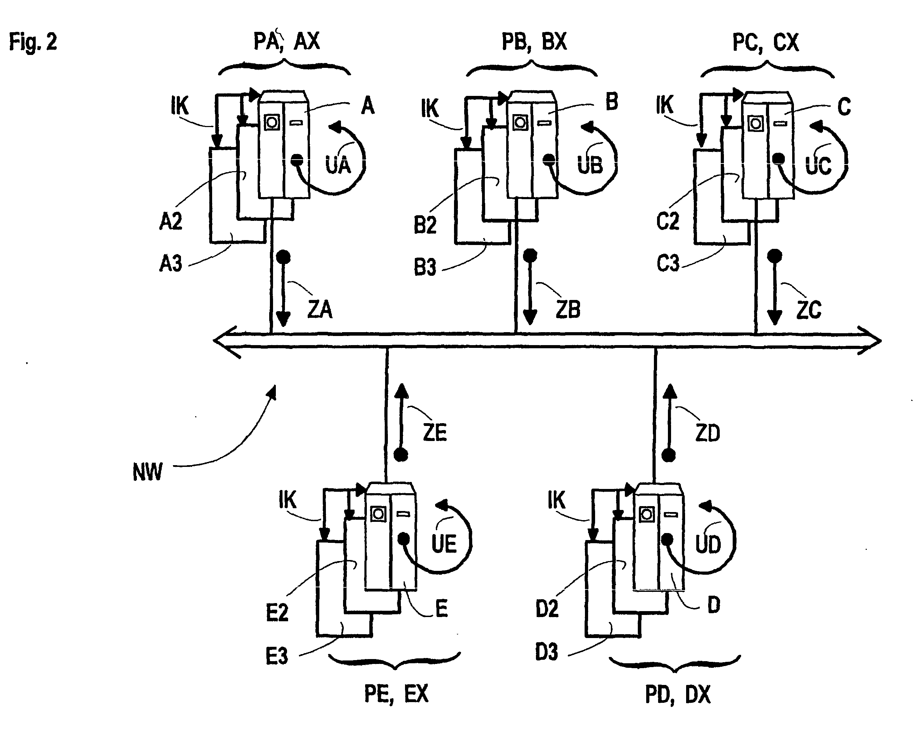

Figur 2 zeigt einen typischen Aufbau eines Netzwerkes NW mit vernetzten Datenverarbeitungsanlagen A bis E, die ihrerseits redundant aufgebaut sind, um eine erhöhte Verfügbarkeit zu erhalten. Die Gruppen AX bis EX von Datenverarbeitungsanlagen im Netzwerk NW sind als 2 von 2 System ausgebildet, zum Beispiel Datenverarbeitungsanlage A und die redundante Datenverarbeitungsanlage A2 mit einer Reservedatenverarbeitungsanlage A3. In einer solchen Konfiguration führen zwei Datenverarbeitungsanlagen A1 und A2 die gleiche Funktionalität aus und im Fehlerfall kann eine der beiden durch die Reservedatenverarbeitungsanlage A3 ersetzt werden. Diese Gruppen stellen an sich bereits eine erhöhte Verfügbarkeit dar, da innerhalb der Gruppen AX bis EX durch geeignete interne Kommunikation IK ein Teil von möglichen Fehlern detektierbar und behebbar ist. Zusätzlich sind jedoch durch das beschriebene Überwachungssystem weitere Prozesse und Daten verifizierbar und auch die Fehlerbehebung ist nicht auf bestimmte Datenverarbeitungsanlagen begrenzt. In Bezug auf das beschriebene Überwachungssystem für vernetzte Datenverarbeitungsanlagen übernehmen die Gruppen AX bis EX die gleiche Funktionalität wie in der Figur 1 die Datenverarbeitungsanlagen A bis E mit den Prozessen PA bis PE. Jede Gruppe AX bis EX übernimmt Überwachungsfunktionen einer anderen Gruppe AX bis EX, so dass im Fehlerfall einer Gruppe AX bis EX möglichst einfach Prozesse und Daten übertragbar sind.

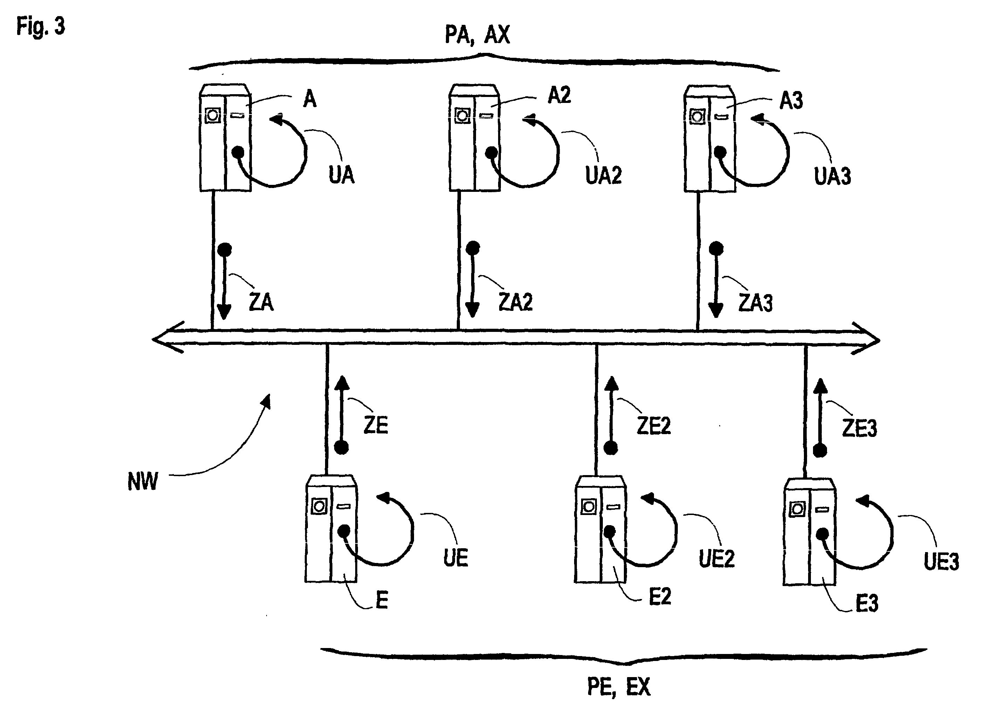

Figur 3 zeigt als Beispiel einen möglichen Netzwerkteil, in welchem die redundanten Datenverarbeitungsanlagen A2 und E2 sowie die Ersatz-Datenverarbeitungsanlagen A3 und E3 direkt mit dem Netzwerk koppelbar sind, so dass die interne Kommunikation IK gemäss Figur 2 in den Gruppen AX und EX durch das beschriebene Überwachungsverfahren für vernetzte Datenverarbeitungsanlagen ersetzbar ist.

### Liste der verwendeten Bezugszeichen

- A, B, C, D, E: Datenverarbeitungsanlage
- A2,B2,C2,D2,E2: redundante Datenverarbeitungsanlage
- A3,B3,C3,D3,E3: Ersatz-Datenverarbeitungsanlagen
- AX,BX,CX,DX,EX: Gruppen von Datenverarbeitungsanlagen im Netzwerk
- PA,PB,PC,PD,PE: Prozess einer Datenverarbeitungsanlage oder einer Gruppen von Datenverarbeitungsanlagen im Netzwerk
- UA,UB,UC,UD,UE: Selbst-Überwachung/Selbstüberprüfung einer Datenverarbeitungsanlage
- UA2,UE2: Selbst-Überwachung einer redundanten Datenverarbeitungsanlage
- UA3,UE3: Selbst-Überwachung einer Ersatz-Datenverarbeitungsanlage
- ZA,ZB,ZC,ZD,ZE: Zustandsinformation und/oder Befundmeldung einer Datenverarbeitungsanlage
- ZA2,ZE2: Zustandsinformation und/oder Befundmeldung einer redundanten Datenverarbeitungsanlage
- ZA3,ZE3: Zustandsinformation und/oder Befundmeldung einer Ersatz-Datenverarbeitungsanlage
- IK: Interne Kommunikation in einer Gruppen von Datenverarbeitungsanlagen
- PA1, PA2, PB1: Lokaler Prozess der Datenverarbeitungsanlage A, beziehungsweise B
- DGA, DGB: Globale Daten der Datenverarbeitungsanlage A beziehungsweise B
- VP: Verwaltungsprozess
- BC: Anfrage der Zustandsmeldungen (Broadcast) an alle vernetzten Datenverarbeitungsanlagen
- NW: Netzwerk

## Patentansprüche

1. Überwachungsverfahren für über ein Netzwerk (NW) verbundene Datenverarbeitungsanlagen (A,B,C,D,E), auf denen zugewiesene Prozesse (PA,PB,PC,PD,PE) ablaufen und die eine Selbstüberwachung (UA,UB,UC,UD,UE) der betreffenden Datenverarbeitungsanlage (A,B,C,D,E) beinhalten;
**dadurch gekennzeichnet, dass**
durch jeden einer Datenverarbeitungsanlage (A,B,C,D,E) zugewiesenen Prozess (PA,PB,PC,PD,PE) eine Zustandsinformation (ZA, ZB, ZC, ZD, ZE) aus der Selbstüberwachung erzeugt und an das Netzwerk (NW) abgegeben wird, und dass ein Prozess (PB) einer Datenverarbeitungsanlage (B) durch eine Zuteilung eine andere Datenverarbeitungsanlage (PA) aufgrund der am Netzwerk (NW) verfügbaren Zustandsinformation (ZA) überwacht.

2. Überwachungsverfahren nach Anspruch 1,
**dadurch gekennzeichnet, dass**
die zuteilung von zu überwachender Datenverarbeitungsanlage (C) zu einem Prozess (PD) zu Beginn des Überwachungsverfahrens statisch ist und während dem Überwachungsverfahren dynamisch aufgrund von Zustandsinformationen (ZA, ZB, ZC, ZD, ZE) geändert werden kann.

3. Überwachungsverfahren nach Anspruch 1 oder 2,
**dadurch gekennzeichnet, dass**
die zugewiesenen Prozesse (PA,PB,PC,PD,PE) identisch ausgebildet sind.

4. Überwachungsverfahren nach Anspruche 2 oder 3,
**dadurch gekennzeichnet, dass**
alle zugewiesenen Prozesse (PA,PB,PC,PD,PE) auch die weiteren nicht einer Datenverarbeitungsanlage zugeteilten Prozesse aufgrund der am Netzwerk (NW) verfügbaren Zustandsinformationen (ZA, ZB, ZC, ZD, ZE) überwachen.

5. Überwachungsverfahren nach einem der Ansprüche 1 bis 4,
**dadurch gekennzeichnet, dass**
im Netzwerk (NW) Gruppen (AX, BX, CX, DX, EX) von Datenverarbeitungsanlagen aufgrund von physikalischen und/oder funktionalen Eigenschaften gebildet werden und durch den einer Gruppe zugewiesenen Prozess (PA,PB,PC,PD,PE) eine Zustandsinformation (ZA, ZB, ZC, ZD, ZE) aus der Selbstüberwachung erzeugt und an das Netzwerk (NW) abgegeben wird, so dass Überwachungsaufgaben für andere einzelne Datenverarbeitungsanlagen oder für andere Gruppen (AX, BX, CX, DX, EX) von Datenverarbeitungsanlagen übernommen werden und umgekehrt.

6. Überwachungsverfahren nach Anspruch 5,
**dadurch gekennzeichnet, dass**
durch den minimal auf einer Datenverarbeitungsanlage (A,B,C,D,E) oder auf einer Gruppe von Datenverarbeitungsanlagen (AX,BX,CX,DX,EX) zugewiesenen Prozess im Netzwerk (NW) Fehler lokalisiert werden, die durch Nicht-Einhalten von definierbaren Zeitrastern oder durch Unvollständigkeit oder durch inhaltliche Angaben offenbart werden.

7. Überwachungsverfahren nach einem der Ansprüche 1 bis 6,
**dadurch gekennzeichnet, dass**
die Zustandsinformationen(ZA,ZB,ZC,ZD,ZE) Eigenschaften über Prozesse (PA, PA1; PB, PB1; ..) beinhalten.

8. Überwachungsverfahren nach einem der Ansprüche 1 bis 7,
**dadurch gekennzeichnet, dass**
in einem Fehlerfall ein zugewiesener Prozess (PA) auf eine andere Datenverarbeitungsanlage (D) oder Gruppe von Datenverarbeitungsanlagen (DX) verlagert wird.

## Claims

1. Monitoring method for data processing systems (A,B,C,D,E) which are connected via a network (NW) and on which assigned processes (PA,PB,PC,PD,PE) run, and which include self-monitoring (UA,UB,UC,UD,UE) of the relevant data processing system (A,B,C,D,E);
**characterised in that**
status information (ZA, ZB, ZC, ZD, ZE) from self-monitoring is produced by each process (PA,PB,PC,PD,PE) assigned to a data processing system (A,B,C,D,E) and passed on to the network (NW), and **in that**, though allocation, a process (PB) of one data processing system (B) monitors another data processing system (PA) on the basis of the status information (ZA) available on the network (NW).

2. Monitoring method according to Claim 1
**characterised in that**
the allocation to a process (PD) of a data processing system (C) to be monitored is static at the commencement of the monitoring method and can be dynamically changed on the basis of status information (ZA, ZB, ZC, ZD, ZE) while the monitoring method is in progress.

3. Monitoring method according to Claim 1 or 2
**characterised in that**
the assigned processes (PA,PB,PC,PD,PE) are identical.

4. Monitoring method according to Claim 2 or 3
**characterised in that**
all assigned processes (PA,PB,PC,PD,PE) also monitor the other processes that are not allocated to a data processing system on the basis of the status information (ZA, ZB, ZC, ZD, ZE) available on the network (NW).

5. Monitoring method according to one of the Claims 1 to 4
**characterized in that**
groups (AX, BX, CX, DX, EX) of data processing systems are formed in the network (NW) on the basis of physical and/or functional characteristics and **in that** status information (ZA, ZB, ZC, ZD, ZE) is produced from self-monitoring by a process (PA,PB,PC,PD,PE) assigned to a group and passed on to the network (NW) so that monitoring functions are assumed for other individual data processing systems or for other groups (AX, BX, CX, DX, EX) of data processing systems, and vice versa.

6. Monitoring method according to Claim 5
**characterised in that**
faults which are disclosed through non-compliance with definable time patterns or through incompleteness or through content-related specifications are localised in the network (NW) by the process assigned as a minimum on a data processing system (A,B,C,D,E) or on a group of data processing systems (AX,BX,CX,DX,EX).

7. Monitoring method according to one of the Claims 1 to 6
**characterised in that**
the status information (ZA,ZB,ZC,ZD,ZE) contains characteristics relating to processes (PA, PA1; PB, PB1; ..).

8. Monitoring method according to one of the Claims 1 to 7
**characterised in that**
in the event of a fault an assigned process (PA) will be relocated to another data processing system (D) or group of data processing systems (DX).

## Revendications

1. Procédé de surveillance pour installations de traitement de données (A, B, C, D, E) qui sont reliées par l'intermédiaire d'un réseau (NW), sur lesquelles s'exécutent des processus attribués (PA, PB, PC, PD, PE) et qui contiennent une auto-surveillance (UA, UB, UC, UD, UE) de l'installation de traitement de données concernée (A, B, C, D, E),
**caractérisé par le fait que**, par chaque processus (PA, PB, PC, PD, PE) attribué à une installation de traitement de données (A, B, C, D, E), une information d'état (ZA, ZB, ZC, ZD, ZE) est produite à partir de l'autosurveillance et est fournie au réseau (NW) et que, suite à une assignation, un processus (PB) d'une installation de traitement de données (B) surveille une autre installation de traitement de données (PA) sur la base de l'information d'état (ZA) disponible sur le réseau (NW).

2. Procédé de surveillance selon la revendication 1, **caractérisé par le fait que** l'assignation d'une installation de traitement de données (C) à surveiller à un processus (PD) est statique au début du procédé de surveillance et peut être modifiée de façon dynamique pendant le procédé de surveillance sur la base d'informations d'état (ZA, ZB, ZC, ZD, ZE).

3. Procédé de surveillance selon la revendication 1 ou 2, **caractérisé par le fait que** les processus attribués (PA, PB, PC, PD, PE) sont conçus de manière identique.

4. Procédé de surveillance selon la revendication 2 ou 3, **caractérisé par le fait que** tous les processus attribués (PA, PB, PC, PD, PE) surveillent aussi les autres processus non assignés à une installation de traitement de données sur la base des informations d'état (ZA, ZB, ZC, ZD, ZE) disponibles sur le réseau (NW).

5. Procédé de surveillance selon l'une des revendications 1 à 4, **caractérisé par le fait que** des groupes (AX, BX, CX, DX, EX) d'installations de traitement de données sont formés dans le réseau (NW) sur la base de propriétés physiques et/ou fonctionnelles et que, par le processus (PA, PB, PC, PD, PE) attribué à un groupe, une information d'état (ZA, ZB, ZC, ZD, ZE) est produite à partir de l'auto-surveillance et est fournie au réseau (NW) de telle sorte que des tâches de surveillance pour d'autres installations de traitement de données individuelles ou pour d'autres groupes (AX, BX, CX, DX, EX) d'installations de traitement de données sont prises en charge et inversement.

6. Procédé de surveillance selon la revendication 5, **caractérisé par le fait que** le processus attribué au minimum à une installation de traitement de données (A, B, C, D, E) ou à un groupe d'installations de traitement de données (AX, BX, CX, DX, EX) localise dans le réseau (NW) des erreurs qui se manifestent à travers le non-respect de trames temporelles définissables, des imperfections ou des indications sur le contenu.

7. Procédé de surveillance selon l'une des revendications 1 à 6, **caractérisé par le fait que** les informations d'état (ZA, ZB, ZC, ZD, ZE) contiennent des propriétés sur des processus (PA, PA1 ; PB, PB1 ; ...).

8. Procédé de surveillance selon l'une des revendications 1 à 7, **caractérisé par le fait que**, en cas d'erreur, un processus attribué (PA) est transféré sur une autre installation de traitement de données (D) ou sur un autre groupe d'installations de traitement de données (DX).
